# EUROPÄISCHE PATENTSCHRIFT

(11) **EP 2 522 448 B1**
(45) Veröffentlichungstag und Bekanntmachung des Hinweises auf die Patenterteilung: **28.08.2013**
(21) Anmeldenummer: 11003942.7
(22) Anmeldetag: 12.05.2011
(51) Int. Cl.: B23D 45/02, B23D 45/20, B23D 45/12

(54) **Fliegende Säge**
Flying saw
Scie mobile

(43) Veröffentlichungstag der Anmeldung: 14.11.2012
(73) Patentinhaber: Reika GmbH & Co. KG, 58093 Hagen (DE)
(72) Erfinder: Braun, Hans-Jörg, 58093 Hagen (DE)
(74) Vertreter: Dörner, Kötter & Kollegen

(56) Entgegenhaltungen:
- EP-A1- 2 163 335
- EP-A2- 0 315 601
- EP-B1- 0 490 328
- DE-A1- 2 800 528
- DE-A1- 2 948 103
- DE-A1- 4 101 749
- DE-C1- 3 917 002
- JP-A- 61 111 806
- US-A1- 2003 209 116
- US-A1- 2006 000 521

## Beschreibung

Die Erfindung betrifft eine fliegende Säge gemäß dem Oberbegriff des Patentanspruchs 1, mit wenigstens einer Führungsschiene, auf dem eine Sägevorrichtung über wenigstens einen Fahrantrieb entlang auf vorgegebene Längen abzulängenden Profil- oder Rohrmaterial verfahrbar gelagert ist, insbesondere während des Ablängens synchron zur Vorschubbewegung des Profil- oder Rohrmaterials. Eine derartige Säge geht beispielsweise aus der US 2003/0209116 A1 hervor.

Zum Ablängen von Profilen oder von längsnahtgeschweißten Rohrsträngen mit einem Durchmesser von mehr als 100mm, die theoretisch endlos sind, kommen so genannte fliegende Sägen zum Einsatz, welche mit dem Vorschub des Profil- bzw. Rohrstrangs synchronisiert sind und den Trennvorgang dem Vorschub des Profil- bzw. Rohrstranges folgend vornehmen. Derartige fliegende Sägen, wie sie beispielsweise aus der DE 31 12 519 A1 bekannt sind, umfassen eine Sägevorrichtung, die innerhalb eines Maschinenbetts bewegbar angeordnet ist. Hierzu sind in dem Maschinenbett Führungs- und Antriebselemente angeordnet. Zur Bewegung der Sägevorrichtung entlang des Maschinenbetts ist dabei regelmäßig in dem Maschinenbett ein Zahnstangenantrieb angeordnet.

Nachteilig an den vorbekannten fliegenden Sägen ist, dass die Erstellung des Maschinenbetts sich als sehr aufwendig gestaltet. Darüber hinaus ist der Zahnstangenantrieb Verschmutzungen durch mit Kühlflüssigkeit angespülte Späne ausgesetzt.

Hier will die Erfindung Abhilfe schaffen. Der Erfindung liegt die Aufgabe zur Grunde, eine fliegende Säge zu schaffen, welche aufwandminimiert herstellbar ist und bei der Verschmutzungen des Antriebs durch Kühlflüssigkeit und Späne vermieden ist. Gemäß der Erfindung wird diese Aufgabe durch die Merkmale des Patentanspruchs 1 gelöst.

Mit der Erfindung ist eine fliegende Säge geschaffen, welche aufwandminimiert herstellbar ist und bei der eine Verschmutzung des Antriebs durch Kühlflüssigkeit und Späne vermieden ist. Durch die Anordnung der wenigstens einen Führungsschiene sowie dem Fahrantrieb oberhalb der Sägevorrichtung ist einer Verunreinigung des Antriebs durch Kühlflüssigkeit und Späne entgegengewirkt. Eine aufwendige Erstellung eines Maschinenbetts entfällt.

Erfindungsgemäß sind zwei Führungsschienen angeordnet, die drei auf diesen verfahrbare Querträger aufnehmen, wodurch ein Portal gebildet ist, an dem die Sägevorrichtung befestigt ist. Hierdurch ist eine zuverlässige Aufhängung der Sägevorrichtung erzielt. Dabei ist vorteilhaft an einem Querträger ein Rahmenelement zur Aufnahme der Sägevorrichtung gebildet.

Die Sägevorrichtung ist über wenigstens einen Antrieb horizontal entlang des Querträgers und/oder vertikal entlang einer orthogonal zu dem Querträger bewegbar. Hierdurch ist eine optimale Anstellung der Sägevorrichtung zu dem abzulängenden Stangen- oder Rohrmaterial ermöglicht.

In weiterer Ausgestaltung der Erfindung umfasst der wenigstens eine Antrieb einen Spindeltrieb. Hierdurch ist eine Feineinstellung der Sägevorrichtung ermöglicht.

In Weiterbildung der Erfindung ist innerhalb des Rahmenelements wenigstens eine vertikale Führung vorhanden, über welche die Sägevorrichtung mit dem Rahmenelement verbunden ist. Hierdurch ist eine geführte vertikale Bewegung der Sägevorrichtung innerhalb des Rahmenelements ermöglicht.

In weiterer Ausgestaltung der Erfindung ist die Sägevorrichtung lösbar mit dem Rahmenelement verbunden. Hierdurch ist ein einfacher Austausch der Sägevorrichtung ermöglicht. Bevorzugt ist die lösbare Verbindung mit einer zur vertikalen Bewegung der Sägevorrichtung innerhalb des Rahmenelements angeordneten Gewindespindel gebildet. Hierdurch ist ein einfaches Aus- und Einfädeln der Sägevorrichtung in vorteilhaft seitlich in dem Rahmenelement angeordneten vertikalen Führungsschienen ermöglicht.

Gemäß der Erfindung ist die Sägevorrichtung durch eine Wirbeltrennvorrichtung gebildet. Hierdurch ist ein effektiver Trennvorgang zum Ablängen von Profil- oder Rohrmaterial ermöglicht. Zudem ist eine derartige Wirbeltrennvorrichtung in kompakter Bauweise realisierbar, wodurch Fliehkräfte reduziert und Beschleunigungsvorgänge optimiert werden können.

In weiterer Ausgestaltung der Erfindung umfasst der wenigstens eine Antrieb einen Servomotor. Hierdurch ist eine genaue Anstellung der Sägevorrichtung an das abzulängende Stangen- oder Rohrmaterial ermöglicht.

In weiterer Ausgestaltung der Erfindung ist der wenigstens eine Fahrantrieb ein Zahnstangenantrieb, wobei parallel zu wenigstens einer Führungsschiene eine Zahnstange eines Zahnstangenantriebs angeordnet ist. Hierdurch ist ein gleichmäßiger Antrieb des die Sägevorrichtung aufnehmenden Querträgers ermöglicht. Ein seitliches Verstellen der Sägevorrichtung auf Grund eines ungleichmäßigen Antriebs ist so verhindert. Vorteilhaft ist parallel zu jeder Führungsschiene eine Zahnstange eines Zahnstangenantriebs angeordnet.

In vorteilhafter Ausgestaltung der Erfindung ist der wenigstens eine Fahrantrieb ein elektromagnetischer Schwebeantrieb. Hierbei ist der Querträger auf dem Portal in Art eines elektromagnetischen Schwebesystems ausgebildet, bei dem die Anziehungskräfte von Elektro- oder Permanentmagneten in bekannter Art und Weise das Tragen und Führen des Querträgers auf den beiden Führungsschienen bewirken. Hierdurch sind Reibungskräfte minimiert, wodurch hohe Beschleunigungen der Sägevorrichtung entlang des abzulängenden Stangen- oder Rohrmaterials realisierbar sind.

Vorteilhaft ist unterhalb der wenigstens einen Sägevorrichtung eine Spänefördereinrichtung angeordnet. Hierdurch ist eine geregelte Rückführung von Kühlflüssigkeit und Spänen für ein nachfolgendes Recycling ermöglicht.

Gemäß der Erfindung ist wenigstens ein Spannmodul zur Aufnahme eines abzulängenden Profil- oder Rohrmaterials angeordnet, das mit jeweils einem Querträger verbunden und an die Sägevorrichtung anstellbar ist. Hierdurch ist ein modularer Aufbau erzielt, bei dem die Spannmodule unabhängig von der Sägevorrichtung bewegt oder ausgetauscht werden können, wodurch beispielsweise die Zugänglichkeit zum Sägewerkzeug verbessert und dessen verschleißbedingter Wechsel erleichtert ist. In Strangrichtung ist beidseitig des Sägemoduls jeweils ein solches Spannmodul angeordnet. In den Spannmodulen kann das abzulängende Rohrmaterial so beidseitig des Sägewerkzeugs fixiert werden. Dabei ist eine sehr nahe Anstellung der Spannmodule an das Sägewerkzeug möglich, wodurch Vibrationen während des Sägevorgangs reduziert werden können.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

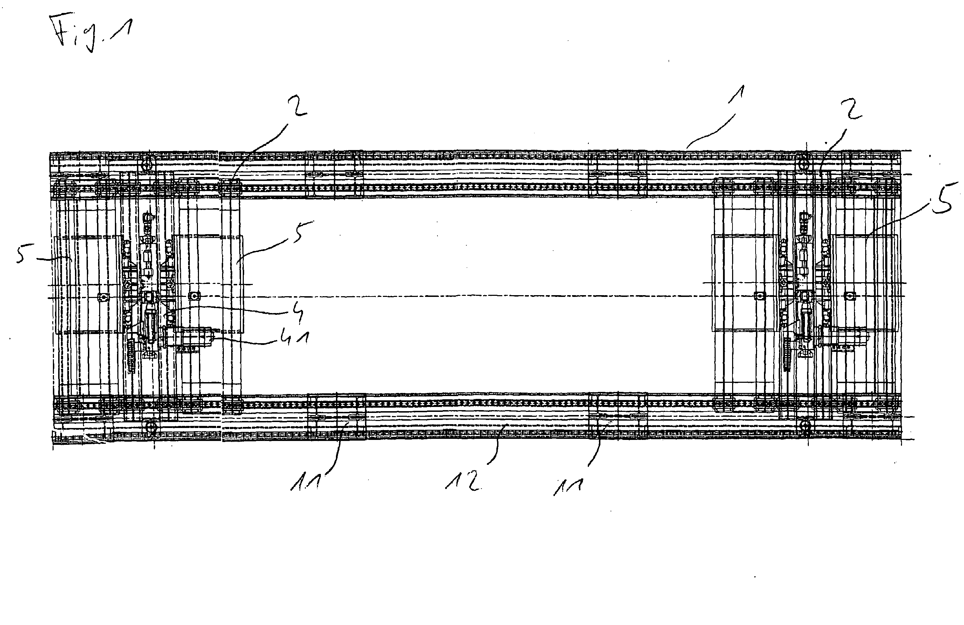

- Figur 1: die schematische Darstellung einer fliegenden Säge mit zwei Sägevorrichtungen in der Draufsicht;

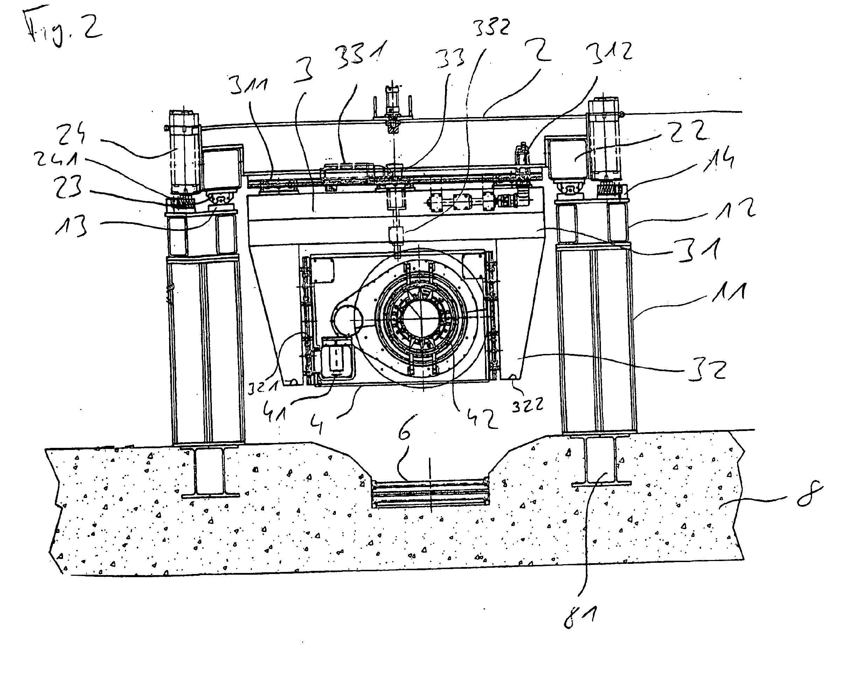

- Figur 2: die schematische Darstellung einer Sägevorrichtung der fliegenden Säge aus Figur 1;

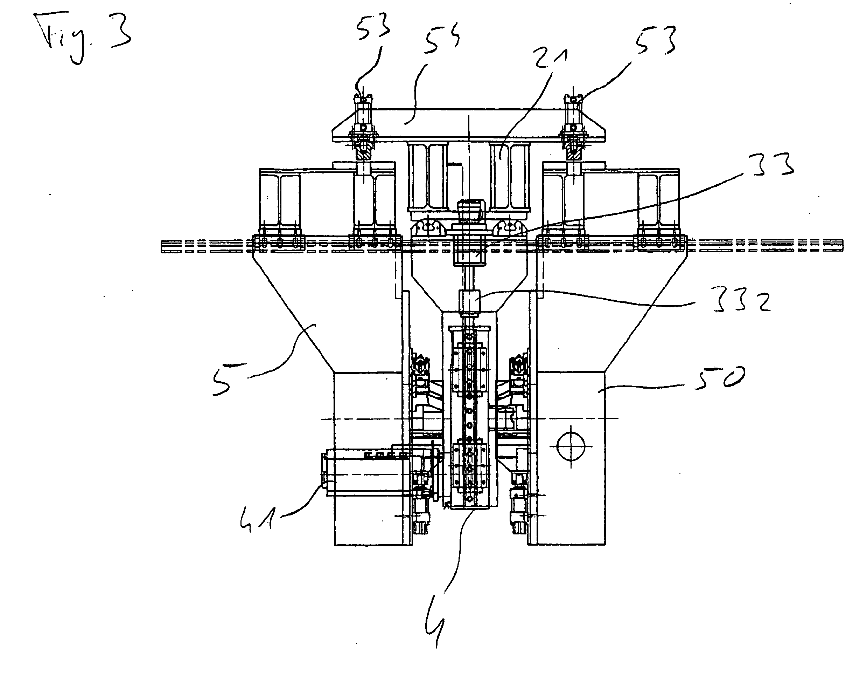

- Figur 3: die schematische Darstellung der Sägevorrichtung aus Figur 2 in der Seitenansicht und

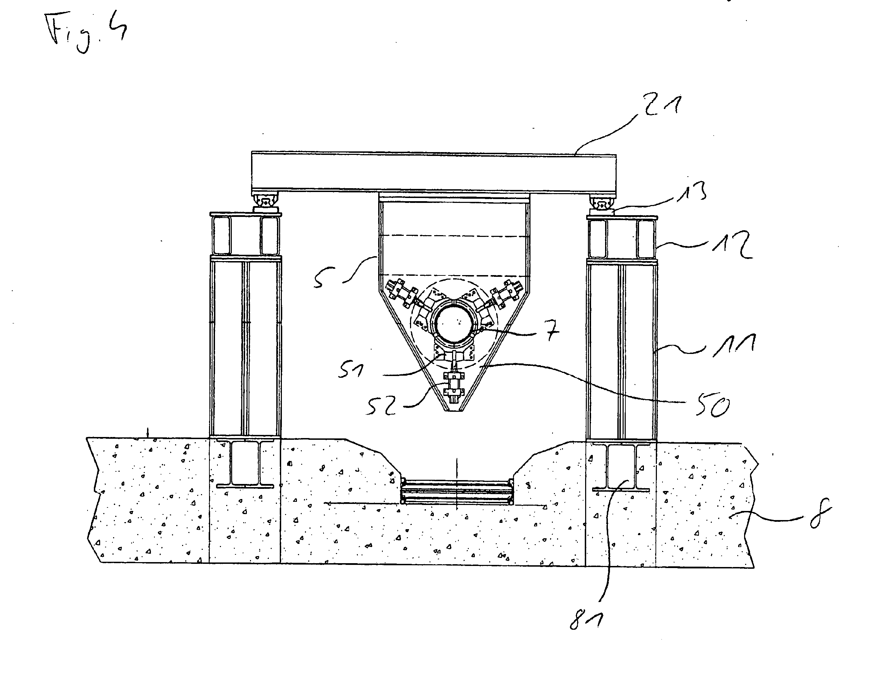

- Figur 4: die schematische Darstellung eines Einspannmoduls der Sägevorrichtung aus Figur 1.

Die als Ausführungsbeispiel gewählte fliegende Säge besteht im Wesentlichen aus einem Schienensystem 1, auf dem ein Querträger 2 verschiebbar angeordnet ist, der einen Wechselrahmen 3 zur Aufnahme einer Wirbeltrennvorrichtung 4 aufnimmt. Beidseitig der Wirbeltrennvorrichtung 4 ist ein Spannmodul 5 zur Einspannung von zu trennendem Profil- oder Rohrmaterial angeordnet. Unterhalb der Wirbeltrennvorrichtung 4 ist ein Spanförderer 6 zum Abtransport von Spänen und Kühlflüssigkeit angeordnet.

Das Schienensystem 1 ist gebildet aus parallel angeordneten Ständern 11, auf denen zwei zueinander parallel angeordnete Träger 12 befestigt sind. Die Ständer 11 sind im Ausführungsbeispiel mit einem in einem Fundament 8 eingegossenen Tragprofil 81 verschraubt. Entlang der Träger 12 ist auf diesen jeweils eine Schiene 13 zur verschieblichen Auflage der Querträger 2 angeordnet. Parallel zu den Schienen 13 ist jeweils außen eine Zahnstange 14 auf dem Träger 12 angeordnet.

Die Querträger 2 sind im Ausführungsbeispiel gebildet durch zwei quer zu den Trägern 12 angeordnete Träger 21, welche über zwei entlang der Träger 12 angeordnete Profile 22 miteinander verbunden sind, sodass ein rechteckförmiger Rahmen gebildet ist. Unterhalb der Profile 22 ist an diesen jeweils eine Führung 23 zum Eingriff mit den Schienen 13 des Schienensystems 1 angeordnet. An beiden Enden eines Trägers 21 ist jeweils ein Servoantrieb 24 angeordnet, dessen Antriebsachse mit einem Zahnrad 241 versehen ist, das in eine Zahnstange 14 des Schienensystems eingreift. Über die Servoantriebe 24 sind die Querträger 2 entlang der Schienen 13 des Schienensystems 1 bewegbar. Die Querträger 2 sind im Ausführungsbeispiel für die Wirbeltrennvorrichtungen wie für die Spannmodule 5 identisch ausgebildet.

An zwei Querträgern 21 ist über horizontale Führungsschienen 311 ein Wechselrahmen 3 befestigt. Der Wechselrahmen 3 ist gebildet aus einem Traggerüst 31, an dem gegenüberliegend zwei Seitenträger 32 angeordnet sind. Dabei ist das Traggerüst 31 mit einem horizontalen Lineartrieb 312 verbunden, über den eine horizontale Bewegung des Wechselrahmens 3 relativ zu den Querträgern 2 ermöglicht ist. An den Seitenträgern 32 sind an ihren dem jeweils gegenüberliegend angeordneten Seitenträger 32 zugewandten Seiten jeweils vertikale Seitenführungen 321 zur verschiebbaren Aufnahme der Wirbeltrennvorrichtung 4 angeordnet. Weiterhin ist an dem Traggerüst 31 eine Spindel 33 angeordnet, die über einen Spindelantrieb 321 antreibbar und mit der Wirbeltrennvorrichtung 4 über eine Kupplung 332 verbunden ist. Die Kupplung 332 ist im Ausführungsbeispiel hydraulisch ver- und entriegelbar ausgebildet. Über die Spindel 33 ist die Wirbeltrennvorrichtung 4 entlang der vertikalen Seitenführungen 321 entlang der Seitenträger 32 verschiebbar.

Wirbeltrennvorrichtungen zum Trennen von rohr- und stangenförmigen Werkstücken im Wirbelverfahren sind beispielsweise aus der EP 490 328 B1 bekannt. Bei einem Wirbelverfahren handelt es sich um ein spanabhebendes Verfahren, bei dem das Werkzeug das Werkstück spiralwirbelartig umkreist. Die Einschnitttiefe wird durch ein oder mehrere, mit hoher Schnittgeschwindigkeit umlaufende Messer, in einem Arbeitsgang hergestellt. Dabei wälzt sich die durch das Schneidwerkzeug gebildete Innenmantelfläche auf der zylindrischen Außenmantelfläche des zu bearbeitenden Werkstücks ab. Dieser Bewegungsvorgang wird der sich ständig kreisenden Bewegung des Schneidwerkzeugs überlagert. Das Wirbelverfahren hat den Vorteil, dass eine Vielzahl von Schneidwerkzeugen, insbesondere Schneidstählen, nebeneinander angeordnet werden können, die über einen größeren Segmentbereich gleichzeitig in Eingriff mit dem Werkstück stehen. Beim Wirbeltrennen wird dabei ein Wirbelsägewerkzeug mit innen liegender Verzahnung eingesetzt. Die Schneidzähne des innenverzahnten Wirbelwerkzeugs können tangential in das Werkstück eindringen. Auf Grund des Wirbelverfahrens braucht der wirksame Eindringradius des Wirbelwerkzeuges nur die Wandstärke des Werkstücks zu umfassen. Handelt es sich hierbei um ein Vollmaterial, so muss das Wirbelwerkzeug nur bis zum Mittelpunkt des Vollmaterials eindringen, da die weitere Hälfte des Werkstücks durch die Umkreisung des Wirbelwerkzeuges abgetrennt wird. Die Wirbeltrennvorrichtung 4 weist einen integrierten Antrieb 41 auf. Im Ausführungsbeispiel ist der Antrieb als elektromagnetischer rotatorischer Direktantrieb ausgebildet.

An den freien Enden der Seitenträger 32 sind im Ausführungsbeispiel weiterhin Positionierbohrungen 332 angeordnet. Die Positionierbohrungen 332 dienen der exakten Positionierung einer - nicht dargestellten - verfahrbaren Hubvorrichtung, die mit Seitenführungen versehen ist, welche im angestellter Position mit den Seitenführungen 321 der Seitenträger korrespondieren, derart, dass die Wirbeltrennvorrichtung 4 über die Spindel 33 in die Seitenträger der Hubvorrichtung bewegt werden und anschließend von der Spindel entkoppelt werden kann. Über eine solche Hubvorrichtung ist ein einfacher Austausch der Wirbeltrennvorrichtung 4 ermöglicht. Zur Positionierung werden an der Hubvorrichtung angeordnete Positionshilfen in die Positionsbohrungen eingeführt, so dass eine positionsgenaue Verbindung zwischen Hubvorrichtung und den Seitenträgern erzielt ist. Zur Vereinfachung des Einfädelvorgangs können Positionierbohrungen und Positionierstifte auch konisch ausgebildet sein.

Beidseitig des von der Wirbeltrennvorrichtung 4 aufgenommen Wirbelwerkzeugs 42 ist an jeweils zwei Querträgern 21 jeweils ein Spannmodul 5 zur Einspannung des abzulängenden Profil- oder Rohrmaterials angeordnet. Das Spannmodul 5 ist gebildet durch eine mit den Querträgern 2 verbundene Konsole 50, welche drei um jeweils 120° versetzt angeordnete Spannbacken 51 aufnimmt, die über Hydraulikzylinder 52 gegen ein einzuspannendes Rohr 7 pressbar sind. Weiterhin ist als Auflager des abzulängenden Stangen- oder Rohrmaterials eine - nicht dargestellte - Rollenführung angeordnet. Die - nicht dargestellte - Rollenführung umfasst im Wesentlichen zueinander angestellte Kegelrollen, auf denen das abzulängende Stangen- oder Rohrmaterial verschieblich gelagert ist. Die Spannmodule 5 sind über hydraulische Verriegelungen 53 lösbar mit zwei Querstreben 54 verbunden, die an den beiden den Wechselrahmen 3 aufnehmenden Querträgern 2 befestigt sind. Die Spannmodule 5 können durch hydraulische Entriegelung von den Querstreben 54 gelöst und separat entlang den Schienen 13 des Schienensystems 1 verfahren werden. Im Ausführungsbeispiel sind die Spannmodule 5 identisch ausgebildet und spiegelgleich zueinander beidseitig der Wirbeltrennvorrichtung angeordnet.

## Patentansprüche

1. Fliegende Säge, mit wenigstens einer Führungsschiene (13), auf dem eine Sägevorrichtung über wenigstens einen Fahrantrieb (24) entlang auf vorgegebene Längen abzulängendem Profil- oder Rohrmaterial verfahrbar gelagert ist, insbesondere während des Ablängens synchron zur Vorschubbewegung des Profil- oder Rohrmaterials, wobei die wenigstens eine Führungsschiene (13) wie auch der Fahrantrieb (24) oberhalb der Sägevorrichtung (4) angeordnet ist, wobei insbesondere kein Maschinenbett vorhanden ist, **dadurch gekennzeichnet, dass** die Sägevorrichtung (4) durch eine Wirbeltrennvorrichtung (4) mit einem Wirbelsägewerkzeug mit innenliegender Verzahnung gebildet ist, wobei zwei Führungsschienen (13) angeordnet sind, die drei auf diesen verfahrbare Querträger (2) aufnehmen, wodurch ein Portal gebildet ist, an dem die Sägevorrichtung (4) befestigt ist, wobei beidseitig der Sägevorrichtung (4) jeweils ein Spannmodul (5) zur Aufnahme eines abzulängenden Profil- oder Rohrmaterials angeordnet ist, das mit jeweils einem Querträger (2) verbunden und an die Sägevorrichtung (4) anstellbar ist.

2. Fliegende Säge nach einem der vorgenannten Ansprüche, **dadurch gekennzeichnet, dass** an einem Querträger (2) ein Rahmenelement (3) zur Aufnahme der Sägevorrichtung (4) gebildet ist.

3. Fliegende Säge nach Anspruch 2, **dadurch gekennzeichnet, dass** die Sägevorrichtung (4) über wenigstens einen Antrieb (34, 351) horizontal entlang des Querträgers (2) und/oder vertikal entlang einer Orthogonalen zu dem Querträger (2) bewegbar ist.

4. Fliegende Säge nach Anspruch 3, **dadurch gekennzeichnet, dass** der wenigstens eine Antrieb (34, 351) einen Spindelantrieb umfasst.

5. Fliegende Säge nach einem der Ansprüche 3 und 4, **dadurch gekennzeichnet, dass** innerhalb des Rahmenelements (3) wenigstens eine vertikale Führung (321) vorhanden ist, über welche die Sägevorrichtung (4) mit dem Rahmenelement (3) verbunden ist.

6. Fliegende Säge nach einem der Ansprüche 2 bis 5, **dadurch gekennzeichnet, dass** die Sägevorrichtung (4) lösbar mit dem Rahmenelement verbunden ist.

7. Fliegende Säge nach einem der vorgenannten Ansprüche, **dadurch gekennzeichnet, dass** der wenigstens eine Fahrantrieb (24) einen Servomotor umfasst.

8. Fliegende Säge nach einem der vorgenannten Ansprüche, **dadurch gekennzeichnet, dass** der wenigstens eine Fahrantrieb (24) ein Zahnstangenantrieb ist, wobei parallel zu wenigstens einer Führungsschiene (13) eine Zahnstange (14) eines Zahnstangenantriebs angeordnet ist.

9. Fliegende Säge nach Anspruch 8, **dadurch gekennzeichnet, dass** parallel zu jeder Führungsschiene (13) eine Zahnstange (14) eines Zahnstangenantriebs angeordnet ist.

10. Fliegende Säge nach einem der Ansprüche 2 bis 8, **dadurch gekennzeichnet, dass** der wenigstens eine Fahrantrieb (24) ein elektromagnetischer Schwebeantrieb ist.

11. Fliegende Säge nach einem der vorgenannten Ansprüche, **dadurch gekennzeichnet, dass** unterhalb der wenigstens einen Sägevorrichtung (4) eine Spanfördereinrichtung (5) angeordnet ist.

## Claims

1. Flying saw with at least one guide rail (13) on which a sawing device is mounted on bearings and can be moved by at least one traversing drive unit (24) along extruded-profile or pipe material to be cut to specified lengths, in particular during the cutting operation, synchronously with the forward advance movement of the extruded-profile or pipe material, where the guide rail or guide rails (13) and the traversing drive unit (24) are arranged above the sawing device (4), where in particular no machine bed is provided, **characterised in that** the sawing device (4) is formed by a whirling cutting device (4) and a whirling sawing tool with inwardly located teeth, where two guide rails (13) are arranged, on which three movable transverse beams (2) are mounted, thereby forming a portal to which the sawing device (4) is attached, where a clamping module (5) is arranged on each of the two sides of the sawing device (4) to receive the extruded-profile or pipe material, each of which modules is joined to a transverse beam (2) and can be adjusted against the sawing device (4).

2. Flying saw in accordance with any of the above claims, **characterised in that** a frame element (3) for holding the sawing device (4) is formed on a transverse beam (2).

3. Flying saw in accordance with claim 2, **characterised in that** the sawing device (4) can be moved by at least one drive unit (34, 351) horizontally along the transverse beam (2) and / or vertically along an orthogonal to the transverse beam (2).

4. Flying saw in accordance with claim 3, **characterised in that** the drive unit or drive units (34, 351) comprise a spindle drive.

5. Flying saw in accordance with either claim 3 or claim 4, **characterised in that** there is at least one vertical guide (321) within the frame element (3), by means of which the sawing device (4) is joined to the frame element (3).

6. Flying saw in accordance with any of the claims 2 to 5, **characterised in that** the sawing device (4) is joined to the frame element detachably.

7. Flying saw in accordance with any of the aforementioned claims, **characterised in that** the traversing drive unit or traversing drive units (24) comprise a servo motor.

8. Flying saw in accordance with any of the aforementioned claims, **characterised in that** the traversing drive unit or traversing drive units (24) are rack and pinion drive units, where a rack (14) of a rack and pinion drive unit is arranged parallel to at least one guide rail (13).

9. Flying saw in accordance with claim 8, **characterised in that** a rack (14) of a rack and pinion drive unit is arranged parallel to each guide rail (13).

10. Flying saw in accordance with any of the claims 2 to 8, **characterised in that** the traversing drive unit or traversing drive units (24) are electromagnetic floating drive units.

11. Flying saw in accordance with any of the aforementioned claims, **characterised in that** a chip-conveying device (5) is arranged beneath the sawing device or sawing devices (4).

## Revendications

1. Scie mobile comprenant au moins un rail de guidage (13) sur lequel prend appui un dispositif de sciage dont au moins un entraînement de translation (24) lui permet de décrire un mouvement de translation le long de matériaux profilés ou tubulaire à tronçonner à des longueurs spécifiées, notamment en synchronisme avec le mouvement d'avance du matériau profilé ou tubulaire pendant le tronçonnage, sachant qu'au moins un rail de guidage (13) et l'entraînement de translation (24) sont agencés au dessus du dispositif de sciage (4), sachant notamment qu'il n'y a pas de bâti machine, **caractérisée en ce que** le dispositif de sciage (4) est formé par un dispositif de sectionnement (4) par mouvement satellite au moyen d'un outil de sciage à mouvement satellite à denture intérieure, sachant que sont agencés deux rails de guidage (13) recevant trois poutres transversales (2) déplaçables sur ces rails, poutres qui forment un portique contre lequel est fixé le dispositif de sciage (4), sachant que des deux côtés du dispositif de sciage (4) est agencé respectivement un module de serrage (5) recevant un matériau profilé ou tubulaire à tronçonner, module qui est relié respectivement à une poutre transversale (2) et qu'il est possible de mettre en applique contre le dispositif de sciage (4).

2. Scie mobile selon l'une des revendications précédentes, **caractérisée en ce que** contre une poutre transversale (2) est formé un élément cadre (3) servant à recevoir le dispositif de sciage (4).

3. Scie mobile selon la revendication 2, **caractérisée en ce que** le dispositif de sciage (4) est déplaçable horizontalement, via au moins un entrainement (34, 351), le long de la poutre transversale (2) et/ou verticalement le long d'une ligne perpendiculaire à la poutre transversale (2).

4. Scie mobile selon la revendication 3, **caractérisée en ce qu'**au moins un entraînement (34, 351) comprend au moins un entraînement à broche.

5. Scie mobile selon l'une des revendications 3 et 4, **caractérisée en ce qu'**à l'intérieur de l'élément cadre (3) se trouve au moins un guidage vertical (321) via lequel le dispositif de sciage (4) est relié avec l'élément cadre (3).

6. Scie mobile selon l'une des revendications 2 à 5, **caractérisée en ce que** le dispositif de sciage (4) est relié de manière détachable avec l'élément cadre.

7. Scie mobile selon l'une des revendications précédentes, **caractérisée en ce qu'**au moins un entraînement (24) de translation comprend un servomoteur.

8. Scie mobile selon l'une de revendications précédentes, **caractérisée en ce qu'**au moins un entraînement de translation (24) est un entraînement à crémaillère, sachant qu'une crémaillère (14) d'un entraînement à crémaillère est agencée parallèlement à au moins un rail de guidage (13).

9. Scie mobile selon la revendication 8, **caractérisée en ce que** parallèlement à chaque rail de guidage (13) est agencée une crémaillère (14) d'un entraînement à crémaillère.

10. Scie mobile selon l'une des revendications 2 à 8, **caractérisée en ce qu'**au moins un entraînement de translation (24) est un entraînement électromagnétique en suspension.

11. Scie mobile selon l'une des revendications précédentes, **caractérisée en ce qu'**en dessous d'au moins un dispositif de sciage (4) est agencé un dispositif (5) convoyeur de copeaux.
